# EUROPÄISCHE PATENTANMELDUNG

(11) **EP 3 657 634 A1**
(43) Veröffentlichungstag der Anmeldung: **27.05.2020**
(21) Anmeldenummer: 18020618.7
(22) Anmeldetag: 26.11.2018
(51) Int. Cl.: H02K 1/24, H02K 16/04

(54) **ROTOR FÜR EINE ELEKTRISCHE RINGMASCHINE**

(71) Anmelder: Rheinisch-Westfälische Technische Hochschule (RWTH) Aachen, 52056 Aachen (DE)
(72) Erfinder: Reimers, Jan-Dirk, 52074 Aachen (DE); De Doncker, Rik, 52074 Aachen (DE); Berthold, Tobias, 52335 Düren (DE); Lange, Tobias, 52064 Aachen (DE); Weiss, Claude Pascal, 52064 Aachen (DE)
(74) Vertreter: Michalski Hüttermann & Partner Patentanwälte mbB

(57) **Zusammenfassung**

Die Erfindung betrifft eine Anordnung in Form einer elektrischen Ringmaschine in Ausführung einer Reluktanzmaschine, die als Synchronreluktanzmaschine betrieben wird, bei der Ausnehmungen an der Außenseite der Rotorbleche in radialer Erstreckung gegenüber den inneren Barrieren ausgeführt sind. Diese führen zu Stegen die die Barrieren halten und umschließen und damit beidseitig definiert gefertigt werden können, auch wenn die fertig montierte Rotorausführung außen später abschließend mechanisch überarbeitet werden wird.

## Beschreibung

### 1. Problembeschreibung und Stand der Technik

Die vorliegende Erfindung betrifft eine Anordnung eines Rotors für eine elektrische Arbeitsmaschine, die als segmentierte Ringmaschine ausgeführt und für den 4-Quadrantenbetrieb mit einem Umrichter vorgesehen ist.

Der Rotor weist mehrere elektrisch voneinander isolierte Einzelbleche auf, die zu einem Blechpaket gestapelt werden. Ein Rotor für einen Reluktanzmotor ist aus der US 5,818,140 A bekannt. Der darin beschriebene Rotor hat ein Blechpaket aus geschichteten Rotorblechen, die Aussparungen, z.B. Ausstanzungen oder Ausschnitte, aufweisen, die Barrieren genannt werden. Dieser Rotor ist allgemein auch als Vagati-Rotor bezeichnet. Durch die Barrieren ergeben sich zumeist geschwungene, streifenförmige Blechabschnitte, die als Flussleitabschnitte dienen. Dadurch wird der magnetischen Fluss in der für die Bereitstellung der Reluktanz des Rotors nötigen Weise geführt. Die Reaktanz des Blechpakets ist in Richtung der q-Achse, d. h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, also die d-Achsen.

Die Aussparungen zum Bilden der Flusssperren führen zum einen zu einer Schwächung der mechanischen Stabilität des Blechpakets, zum anderen führen aber die absichtlich dünnen Stege dennoch zu einem ungewollten Streufluss. Dieser vermindert die Drehmomentbildung. Daher ist sowohl die Dicke, wie auch die Konstanz der Dicke der Stege ein Maß für die Performance des Rotors.

Die grundsätzlich streifenförmigen Flussleitabschnitte führen jedoch zu einer berechenbaren und grundsätzlich hohen Drehmomentausbeute. Die Fertigungstoleranzen wirken nun insbesondere auf die Geometriemaße die ebenso durch ein kleines Maß geprägt werden, die Stegdicke ist ein solches Maß. Die Stegdicke kann und sollte in der Größenordnung der Elektroblechdicke liegen, welche sich zwischen 0,8 und 0,2 mm befindet.

Die Stege können also zwischen 0,2 und auch 1,2 mm liegen.

Alleine die Rundheitsmaße eines 1,2 m im Durchmesser bemaßten Rotors kann in Segmentbauweise einen guten Bruchteil dessen aufweisen. Die Stegdicke an den Barrierenenden wird bei Bausführung nach dem Stand der Technik durch diese Fertigungs- und Bautoleranzen additiv überlagert. Selbst wenn der montierte Rotor mit Aufmaß paketiert wird und folgend auf sein Endmaß abgearbeitet wird, so addieren sich Exzentrizitäten umlaufend auf die Stegdickenverteilung. Grundsätzlich dickere Stegbreiten lassen den prozentualen und umlaufenden Dickenfehler oder gar ein Zerstören der Stege beim Abarbeiten weniger wahrscheinlich und geringer werden, vermindern aber das mögliche Drehmoment und erzeugen einen umlaufenden Drehmoment- und Flussfehler.

Der Erfindung liegt die Aufgabe zugrunde, einen Reluktanzrotor der eingangs bezeichneten Art anzugeben, der sowohl ein hohes Drehmoment als auch eine vereinfachte Fertigung ermöglicht, so dass er insbesondere als kostengünstiger industrieller Großantrieb geeignet ist.

Die Aufgabe wird durch die Gegenstände der unabhängigen Patentansprüche gelöst. Vorteilhafte Weiterbildungen der Erfindung ergeben sind durch die Merkmale der Unteransprüche. Der erfindungsgemäße Rotor ist auch hier als Reluktanzrotor nach dem Prinzip von Vagati ausgebildet, das heißt er weist Rotorblechschichten aus einem ferromagnetischen Material auf, wobei jede Rotorblechschicht aus einem oder mehreren Rotorblechen gebildet ist und zumindest eine durch eine Aussparung in der Rotorblechschicht gebildete Flusssperre bzw. Barriere aufweist.

Das vorliegende Beispiel weist drei Barrieren auf, die Ausführungen treffen aber auch auf Rotorblechschichten mit mehreren Flusssperren zu.

Die Anwendungsanforderungen an die Barrieren und Stege treffen im Rahmen der konstruktiven Gestaltung auf die Notwendigkeit der Fertigungsfähigkeit, der geeigneten Fertigungsfolge bei einer Modulbauweise oder aber auf konstruktive Plattformkonzepte, die die wirtschaftliche und damit industrielle Herstellung von Antriebskomponenten durch Komponentenhersteller erst ermöglicht. In diesem Anforderungsfeld bestehen nach wie vor Probleme innerhalb des technologischen Kompromisses der konstruktiven und fertigungstechnisch optimierten Bauausführung.

Das Problem der eingangs beschriebenen Elektromaschinen und auch der Ausführung der Fertigung nach Stand der Technik betrifft die umlaufende Stegdicke der Barrieren nach Montage und auch nach abarbeiten des Fertigungsaufmaßes der Rotorbleche bei größeren Luftspaltabmessungen.

Das Problem innerhalb der Umsetzbarkeit von größeren Durchmessern steht und fällt mit der Möglichkeit den Läufer trotz Montage- und Fertigungstoleranzen umlaufend gleichmäßig mit Barrieren zu gestalten und **die Luftspaltkonstanz** zu wahren, insbesondere bei einem im Vergleich zum üblichen Maß vergrößerten Luftspaltdurchmesser, wie er bei Ausführungen als Scheibenmaschine mit hohem Moment vorliegen würde.

Diese technischen Probleme werden in keiner vorliegenden Anmeldung gelöst. Eine Umsetzung ist nicht bekannt.

### 2. Erfindungsgemäße Lösung

Es besteht für die Anordnung die **Aufgabe** einen Bauausführung vorzuschlagen, die es ermöglicht die Barrierenstruktur, wie er erfindungsgemäß ausgeführt, gleichmäßig herzustellen und vereinfacht zu fertigen und wird im Folgenden näher vorgestellt.

Zur **Lösung dieser Aufgabe** schafft die vorliegende Erfindung eine Anordnung der eingangs genannten Art, die dadurch gekennzeichnet ist, dass Ausnehmungen an der Außenseite der Rotorbleche in radialer Erstreckung gegenüber den inneren Barrieren ausgeführt sind. Diese führen zu Stegen die beidseitig definiert gefertigt werden und trotz weiterer Fertigungsschritte wie z.B. abarbeiten eines Aufmaßes zum endgültigen Luftspaltdurchmesser nicht weiter bearbeite werden müssen.

### 3. Beschreibung

Diese und weitere Merkmale und Vorteile der vorliegenden Erfindung werden anhand der nachfolgenden Beschreibung verschiedener erfindungsgemäßer Anordnungen unter Bezugnahme auf die beiliegende Zeichnung deutlich. Darin ist:
Figur 1 eine schematische Darstellung der Ausführung eines Läuferbleches mit Flussbarrieren nach dem Stand der Technik mit Aufmaß und ohne äußere Ausnehmungen für die Barrierenstege.
Figur 2 eine schematische Darstellung einer Ausführung eines Läuferbleches mit Flussbarrieren nach dem erfindungsgemäßen Vorgehen mit oder ohne Aufmaß und insbesondere mit äußeren Ausnehmungen für die Barrierenstege.
Figur 3 eine schematische Darstellung der äußeren Ausnehmungen für die Barrierenstege in größerer Darstellung

Im Folgenden meint die Verwendung des Begriffes E-Maschine oder Antrieb sowohl eine motorisch, wie auch generatorisch arbeitende Elektromaschine. Der Begriff Läufer meint den drehenden Teil der Elektromaschine, der im drehmomentbildenden Teil aus Elektroblech bzw. aus Ringschnitten oder Segmenten bestehen kann.

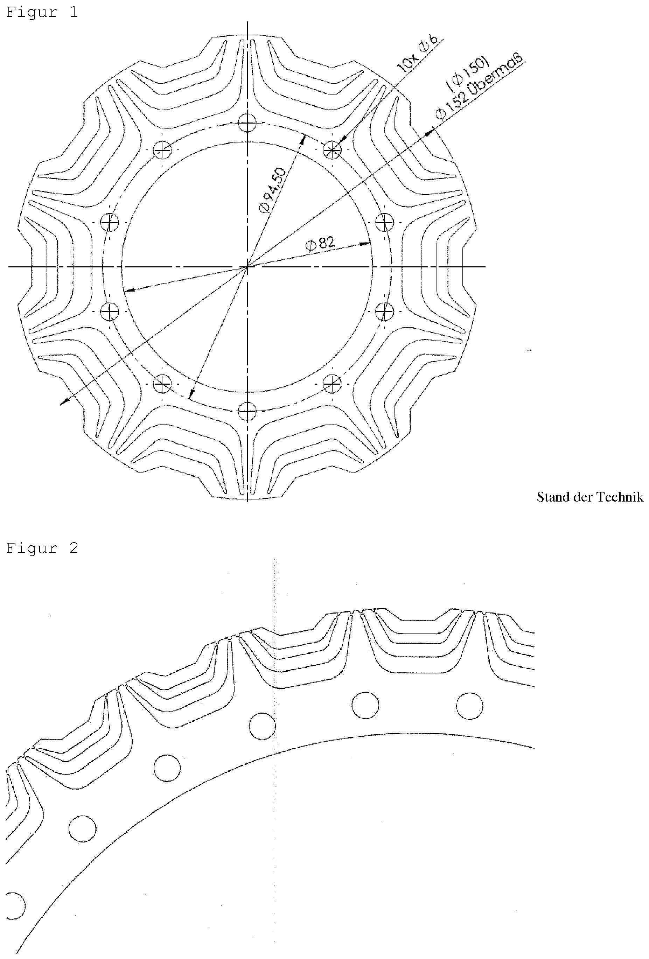

Figur 1 zeigt die heute übliche Ausführung eines Rotor- bzw. auch Läuferschnittes für eine Synchronreluktanzmaschine nach Stand der Technik. Je nach Bauausführung kann der Rotorschnitt ein Aufmaß zum Luftspaltdurchmesser aufweisen, oder aber direkt das Maß des Luftspaltdurchmessers aufweisen. Die Toleranzketten der Baugruppen, die sich anhand der fertigungstechnischen Ausgestaltung ergeben bzw. erzielen lassen geben hier unter Umständen ein Aufmaß vor, das später nach der Montage zum gewünschten Luftspaltdurchmesser abgearbeitet werden sollte.

Sämtliche Fertigungs- und Montagetoleranzen müssen im Aufmaß berücksichtigt sein, so dass später der Luftspaltdurchmesser erzielt werden kann, ohne nicht gewünschtes Material zu entfernen, oder gegenüberliegend zur Exzentrizität der Maximaltoleranzlage ins Freie zu schneiden.

In erfindungsgemäßer Art und Weise ist in Figur 2 ein Rotorschnitt für eine Synchronreluktanzmaschine dargestellt.

Außenseitig sind dort wie abgebildet Ausnehmungen angeordnet, die die Stege der Barrieren außen abschließen. Dies führt dazu das mit und ohne verwendetem Aufmaß die Stegdicke über den Umfang voreingestellt werden kann. Immer vorhandene Toleranzen führen bei Rotoren mit Aufmaß nicht dazu, das beim Abarbeiten des Aufmaßes die Toleranz in der Stegdicke der Barrieren eingeprägt wird. Sie wirkt nur auf die äußere Dicke der Barrierenerstreckung und nicht im sensitiven Bereich der dünnen Stege, die im Betrieb sättigen müssen.

Daher führt eine Exzentrizität der Rotorblechausrichtung, wie sie bei größeren Luftspaltdurchmessern in der Größenordnung der Stegdicke möglich werden kann, nicht zu einer umlaufenden Stegdickenänderung, die sich im lokalen Fluss und damit auch im Strom abzeichnen würde.

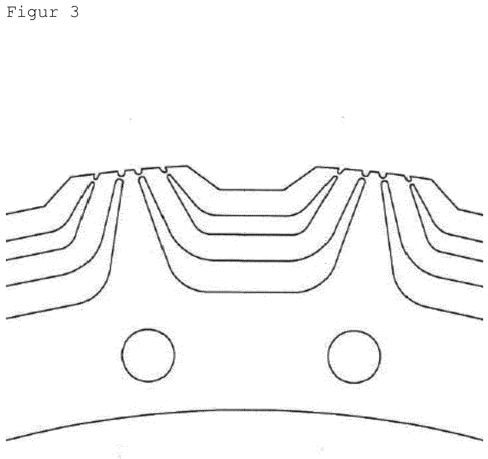

Details der äußeren Ausnehmungen sind in Figur 3 dargestellt. Dargestellt ist eine Barrierenstruktur mit drei Barrieren, bei der die äußere eine weitere mittlere Ausnehmung in der äußeren Rotorkontur aufweist. Die äußere und die mittlere Barriere ist mit ihren beidseitigen Stegen mit den erfindungsgemäßen Ausnehmungen an der äußeren Luftspaltseite des späteren Maschinenluftspaltdurchmessers versehen. So lassen sich pro äußerer Barriere zwei Ausnehmungen hin zur mittleren Barriere finden und zwei weitere äußere Ausnehmungen zwischen mittlerer Barriere und der inneren, dritten Barriere finden. Die Ausnehmungen sind gegenüberliegen zu den inneren Ausschnitten der Barrieren.

Vorteilhafterweise ergibt sich eine definierte Stegdicke trotz umlaufender Exzentrizität des Mittelpunkts der Barrierenstruktur bedingt durch Fertigungs- und Montagetoleranzen. Insbesondere eine Bauweise mittels Rotorsegmentelementen wird dadurch überhaupt erst möglich, die andernfalls aufgrund der Montagetoleranzen zu schlechten Betriebsbedingungen der Elektromaschine führen würden. Dies ermöglicht es Maschinen mit größeren Luftspaltdurchmessern kostengünstig zu bauen.

Die Ausnehmungen und die Barrieren, bzw. die Rotorbleche können mittels Schneidverfahren oder Trennverfahren gefertigt werden. Es bieten sich explizit das Laserschneiden, Stanzen oder Erodieren an.

Ein im Sinne Flussführung schädlicher Kanteneffekt der Blechfertigung führt bei erfindungsgemäßer Verwendung der Ausnehmungen und folgendem Abarbeiten der Außenflächen zu einer bleibenden Beeinflussung der Stegkanten in den Ausnehmungen und damit Wirkung der Kanteneffekte auf die dünnen Stege beidseitig. Die abgearbeiteten Flächen des Rotors am Luftspalt zum Stator jedoch werden "freigelegt" und verbleiben dann in geringerem Umfang magnetisch geschädigt und entsprechen dann weitgehend dem Basismaterial. Damit wird in zusätzlich wirkender Art und Weise die Flussführung in den Stegen im Vergleich zum umliegenden Luftspaltbereich mehr behindert, was zu verbessertem Maschinenverhalten führt.

In erfindungsgemäßer Art fördert die zusätzliche Strukturierung der Rotormantelfläche durch die Ausnehmungen die Luftumwälzung im Luftspalt.

Die heute übliche reine Rückseitenkühlung heutiger Radialflussmaschinen ist aufgrund des Wärmetransportes aus dem Luftspalt- und Wicklungsbereich bis hin zur Blechpaketrückseite weniger optimal als im Seitenbereich und im Luftspalt. Innerhalb eines radial umschlossenen Luftspaltes ist der Luftaustausch zudem erheblich reduziert. Gleichzeitig verfügt die stark verwirbelte Spaltströmung jedoch über einen extrem hohen Wärmeübergang, der nicht genutzt wird, da die Luft nicht aus dem umlaufenden Luftspalt gefördert werden kann. Hier erfolgt erfindungsgemäß ein erheblich schnellerer Luftaustausch aus dem Luftspalt heraus und hinein bedingt durch die Ausnehmungen an den Stegen. In Kombination mit der nötigen Schrägung der Rotorpakete zur Verminderung des typischen Drehmomentrippels der Barrierenstruktur ergibt sich eine verbesserter axialer Luftaustausch im Luftspalt und dessen Luftführung.

Die erfindungsgemäße Rotorausführung ermöglicht es eine segmentierte Bauweise auszuführen, die für Baugrößensprünge verwendet werden kann ohne bei wachsendem Luftspaltdurchmesser die Rotorringe ebenfalls als Vollschnitt mit wachsen zu lassen. Die Rotorschnitte können segmentiert werden und die addierten Toleranzen fallen erfindungsgemäß weniger ins Gewicht.

Die damit vereinfacht ermöglichte segmentierte Bauweise der ringförmigen Reluktanzmaschine ermöglicht demnach eine ebenfalls erfindungsgemäße Modularisierung der Fertigungsmittel. Die grundsätzlich ähnliche Auslegung einer Polgeometrie ermöglicht zudem weiterhin eine Baukastenmethodik und einen Modulbau in Bezug auf einer Skalierbarkeit auf mehrere Leistungsgrößen und Drehmomentklassen, trotz gleichbleibender Fertigungstechnologie und Fertigungsfolge. Verschnitt wird in erheblichem Umfang gemindert und ermöglicht auch für sehr große Rotordurchmesser in der segmentierten Bauweise nach heutigen Maßstäben einen Serienbau der Einzelbleche trotz Einzelstückbau der Motoren oder dessen Module.

Radantriebe, Lüfterräder, Lüfterwalzen, Drehtische, Rohrmühlen, Rohröfen, Windturbinen, Strömungsmaschinen können innerhalb eines breiten Leistungsbereiches auf kleineren Fertigungsmaschinen hergestellt werden und fertigungstechnisch auf ein komplettes Baukastensystem reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Z.B. ist die Bauausführung der Ausnehmungen auch für Außenläufer in gleichsam invertierter Ausführung gemeint.

## Patentansprüche

1. Rotor für eine elektrische Ringmaschine in Ausführung einer Reluktanzmaschine, die als Synchronreluktanzmaschine betrieben wird,
die **dadurch gekennzeichnet, dass**
Ausnehmungen an der Außenseite der Rotorbleche in radialer Erstreckung gegenüber den inneren Barrieren ausgeführt sind.

2. Rotor für eine elektrische Ringmaschine nach Anspruch 1, die als Außen- oder Innenläufer ausgeführt ist.

3. Rotor für eine elektrische Ringmaschine nach Anspruch 1, die aus segmentierten Rotorblechen ausgeführt ist und der Rotor aus den Segmenten zusammengesetzt wird.

4. Rotor für eine elektrische Ringmaschine nach Anspruch 1, bei dem mittels einer doppelwirkenden Anordnung der Statorausführung als Außen- und Innenläufer ein Kraftausgleich in radialer Richtung im doppelten Luftspalt bewirkt wird,

5. Rotor für eine elektrische Ringmaschine nach einem der vorherigen Ansprüche, bei dem die Rotorbleche mit einem Aufmaß gefertigt werden, welches nah Montage abgearbeitet wird.

6. Rotor für eine elektrische Ringmaschine nach einem der vorherigen Ansprüche, bei dem die Rotorstruktur mittels Magnetmaterial in D- und Q-Achse zusätzlich zur Flussführung der Barrierenstruktur manipuliert wird.
